# EUROPEAN PATENT APPLICATION

(11) **EP 4 685 965 A1**
(43) Date of publication of application: **28.01.2026**
(21) Application number: 24862987.5
(22) Date of filing: 04.07.2024
(51) Int. Cl.: H01M 50/317, H01M 50/251, H01M 10/6556, H01M 10/613, H01M 50/383, H01M 50/375, H01M 50/342, H01M 50/30

(54) **BATTERY PACK AND ESS COMPRISING SAME**

(30) Priority: 07.09.2023 KR 20230119307; 07.09.2023 KR 20230119308; 01.11.2023 KR 20230149469; 17.11.2023 KR 20230159736
(71) Applicant: LG Energy Solution, Ltd., Seoul 07335 (KR)
(72) Inventor: SIM, Chang-Hwi, Daejeon 34122 (KR); OK, Seung-Min, Daejeon 34122 (KR); LEE, Jeong-Won, Daejeon 34122 (KR); JEONG, Chan-Young, Daejeon 34122 (KR); JO, Sang-Hyun, Daejeon 34122 (KR); CHOI, Yeo-Joo, Daejeon 34122 (KR)
(74) Representative: BCKIP Part mbB
(86) International application number: PCT/KR2024/009475
(87) International publication number: WO 2025/053404

(57) **Abstract**

A battery pack according to an embodiment of the present disclosure includes a plurality of battery cells; a pack case accommodating the plurality of battery cells, and having a venting portion configured to vent gas produced from the battery cell to outside; and a cover member attached to the pack case and configured to open and close the venting portion.

## Description

### TECHNICAL FIELD

The present disclosure relates to a battery pack and a battery pack and an energy storage system (ESS) including the same.

The present application claims priority to Korean Patent Application No. 10-2023-0119307 filed on September 7, 2023 in the Republic of Korea, the disclosure of which is incorporated herein by reference.

The present application claims priority to Korean Patent Application No. 10-2023-0149469 filed on November 1, 2023 in the Republic of Korea, the disclosure of which is incorporated herein by reference.

The present application claims priority to Korean Patent Application No. 10-2023-0119308 filed on September 7, 2023 in the Republic of Korea, the disclosure of which is incorporated herein by reference.

The present application claims priority to Korean Patent Application No. 10-2023-0159736 filed on November 17, 2023 in the Republic of Korea, the disclosure of which is incorporated herein by reference.

### BACKGROUND

Due to being easily applicable to different types of products and having electrical properties such as high energy density, secondary batteries are commonly applied to not only portable devices but also electric vehicles (EVs), hybrid electric vehicles (HEVs) or energy storage systems (ESSs). Secondary batteries remarkably reduce the use of fossil fuels, and in addition to the primary advantage, they do not generate by-products from the use of energy. From this perspective, secondary batteries are gaining attention as a new source of energy that is more environmentally friendly and energy-efficient.

A plurality of battery cells may be connected in series/in parallel to form a battery pack according to the charge/discharge capacity of the battery pack required for Electric Vehicle (EV), Hybrid Electric Vehicle (HEV) or Energy Storage System (ESS). In this instance, it is general to form a battery module including at least one battery cell and then form a battery pack or a battery rack using at least one battery module with an addition of other elements. Alternatively, recently, Cell To Pack type battery packs are manufactured by directly receiving battery cells in a pack housing without modularization.

However, in the case of the battery pack including a large number of lithium secondary batteries, in the event that fire and explosion occur, damage will be bigger. The fire in the battery pack starts from an abnormal temperature rise and gas generation of the battery cell in the battery pack. Accordingly, when the internal pressure of the battery cell increases over a predetermined level, venting occurs, and high temperature gases and high temperature sparks including electrode active materials and aluminum particles come out of the battery cell.

Accordingly, to ensure stability of the battery pack while in use, it is necessary to release venting gases to the outside of the battery pack quickly to prevent the internal pressure of the battery pack from increasing any longer when a thermal event such as thermal runaway occurs in the battery pack. In case venting gases are not properly released into the atmosphere, it may result in faster thermal runaway propagation between battery cells. Additionally, a bigger problem, for example, explosion may occur in the battery pack, so it is very important to release venting gases into the atmosphere.

The conventional battery pack has a venting portion in a pack case to release high temperature venting gases to the outside of the pack case when the thermal event occurs in a specific battery cell or battery module. In this instance, the venting portion is hollow like a hole to guide gas venting from inside to outside.

However, in the case of this type of battery pack, external impurities such as moisture may enter through the venting portion. In particular, when a cooling medium is supplied to the battery pack by water cooling, not air cooling, condensation forms on a cooling pipe disposed outside of the battery pack, and moisture infiltrates the battery pack through the venting portion formed of the hole, failing to ensure the waterproofing performance of the battery pack.

Accordingly, there is an emerging need for technology for preventing infiltration of impurities such as moisture into the battery pack through the venting portion in normal condition of the battery pack.

Further, there is an emerging need for technology for venting high temperature gas to the outside of the battery pack through the venting portion quickly to prevent heat accumulation or transfer in the battery pack and suppress flames when thermal events occur in the battery pack.

### DISCLOSURE

### Technical Problem

The present disclosure is designed to solve the above-described problems, and therefore the present disclosure is directed to providing a battery pack for ensuring safety and reliability in an abnormal situation of a battery cell or a battery module and an energy storage system (ESS) including the same.

However, the problems to be solved by the present disclosure are not limited to the above-described problems, and these and other problems will be clearly understood by those skilled in the art from the following description.

### Technical Solution

To solve the above-described problems, a battery pack according to an aspect of the present disclosure includes a plurality of battery cells; a pack case accommodating the plurality of battery cells, and having a venting portion configured to vent gas produced from the battery cell to outside; and a cover member attached to the pack case and configured to open and close the venting portion.

The cover member may be configured to be opened to vent the gas produced from the battery cell to the outside when at least one of a specific temperature or a specific pressure in the pack case is reached.

The pack case may include a rib configured to cover at least part of the venting portion.

The cover member may be attached to an outer surface of the pack case along a circumference of the venting portion.

The cover member may be attached to an inner surface of the pack case along a circumference of the venting portion, and the rib may be configured to be further protruded inward than the inner surface of the pack case.

The rib may include a thickness decreasing part toward the inner surface of the pack case.

The rib may be inclined in an outward direction of the pack case.

The venting portion may include a plurality of vent holes defined by the rib, and the cover member may be different in thickness for each of the plurality of vent holes.

The battery pack may further include an opening/closing member disposed in the pack case and configured to open and close at least one of the plurality of vent holes.

The venting portion may include a plurality of venting portions, and at least some of the plurality of venting portions may have different sizes.

The battery pack may further include a cooling unit disposed in the pack case and configured to allow a cooling medium to flow, and the cover member may be disposed on a side of the pack case at which the cooling unit is located.

The battery pack according to an embodiment of the present disclosure may further include a venting device mounted in the venting portion and configured to be opened and closed.

The cover member may be attached to an outer side of the venting device, and configured to be opened together when the venting device is opened in order to vent the gas to the outside of the pack case.

The venting device may have a protruding portion configured to be protruded toward the cover member.

Additionally, an energy storage system (ESS) according to the present disclosure may include the battery pack according to the present disclosure.

### Advantageous Effects

According to an aspect of the present disclosure, it may be possible to ensure waterproofing and dust resistant functioning of the battery pack, thereby preventing infiltration of moisture or dust into the battery pack, and ensuring safety and reliability of the battery pack.

Additionally, according to an aspect of the present disclosure, it may be possible to release venting gas to the outside of the pack case when the gas is produced in an abnormal situation of the battery cell, thereby effectively ensuring thermal propagation prevention performance of the pack.

Further, according to an aspect of the present disclosure, it may be possible to prevent heat accumulation in the pack case, thereby preventing thermal damage to other battery cells or battery modules.

Additionally, according to an aspect of the present disclosure, it may be possible to prevent oxygen from entering the pack case when venting gas is completely released to the outside of the pack case, thereby preventing or suppressing flames in the battery pack.

Accordingly, it may be possible to prevent or delay events, for example, fires or explosions resulting from thermal runaway in the battery pack or devices including the battery pack.

Besides, the present disclosure may have many other effects, and the effects will be described in each embodiment, or with regard to effects that can be easily inferred by those skilled in the art, the corresponding description is omitted.

### BRIEF DESCRIPTION OF THE DRAWINGS

The accompanying drawings illustrate the exemplary embodiments of the present disclosure and together with the following detailed description, serve to provide a better understanding of the technical aspect of the present disclosure, and thus the present disclosure should not be construed as being limited to the drawings.
FIG. 1 is a full perspective view of a battery pack according to an embodiment of the present disclosure.
FIG. 2 is a perspective view showing the inside of a battery pack according to an embodiment of the present disclosure.
FIG. 3 is an enlarged cross-sectional view showing a cover member in a battery pack according to an embodiment of the present disclosure.
FIG. 4 is a cross-sectional view showing an embodiment of a cover member in open state in a battery pack according to an embodiment of the present disclosure.
FIG. 5 is a diagram showing a gas venting direction in a battery pack according to an embodiment of the present disclosure. For example, FIG. 5 is a cross-sectional view of FIG. 1, taken along the line I-I', showing some components at the front side.
FIG. 6 is an enlarged cross-sectional view showing a cover member in a battery pack according to another embodiment of the present disclosure.
FIG. 7 is an enlarged perspective view showing the main parts of a battery pack according to another embodiment of the present disclosure.
FIG. 8 is a front view of a battery pack according to an embodiment of the present disclosure.
FIG. 9 is an enlarged view showing the main parts of a battery pack according to an embodiment of the present disclosure.
FIG. 10 is an enlarged view showing the main parts of a battery pack according to another embodiment of the present disclosure.
FIG. 11 is a front perspective view of a battery pack according to an embodiment of the present disclosure.
FIG. 12 is a rear perspective view of a battery pack according to an embodiment of the present disclosure.
FIG. 13 is a diagram showing a venting device separated from a pack case in a battery pack according to another embodiment of the present disclosure.
FIG. 14 is an enlarged perspective view showing a venting device in a battery pack according to another embodiment of the present disclosure.
FIG. 15 is a cross-sectional view showing a venting device in closed state in a battery pack according to another embodiment of the present disclosure. For example, FIG. 15 is a cross-sectional view of FIG. 1, taken along the line I-I', showing some components at the front side.
FIG. 16 is a cross-sectional view showing an embodiment of a venting device in open state in a battery pack according to another embodiment of the present disclosure. For example, FIG. 16 is a cross-sectional view of FIG. 1, taken along the line I-I', showing some components at the front side.
FIG. 17 is a diagram showing a venting device of a battery pack according to another embodiment of the present disclosure.
FIG. 18 is a diagram showing a venting device of a battery pack according to another embodiment of the present disclosure.
FIG. 19 is a diagram showing a venting device of a battery pack according to another embodiment of the present disclosure.
FIG. 20 is a front view showing the main parts of a battery pack including a cover member according to another embodiment of the present disclosure.
FIG. 21 is a cross-sectional view of a battery pack including a cover member according to another embodiment of the present disclosure.
FIG. 22 is a cross-sectional view showing an embodiment of a cover member in open state in a battery pack according to another embodiment of the present disclosure.
FIG. 23 is a front view showing the main parts of a battery pack including a cover member according to another embodiment of the present disclosure.
FIG. 24 is a cross-sectional view showing an embodiment of a cover member in open state in a battery pack according to another embodiment of the present disclosure.
FIG. 25 is a cross-sectional view showing an embodiment of a cover member in open state in a battery pack according to another embodiment of the present disclosure.

### BEST MODE

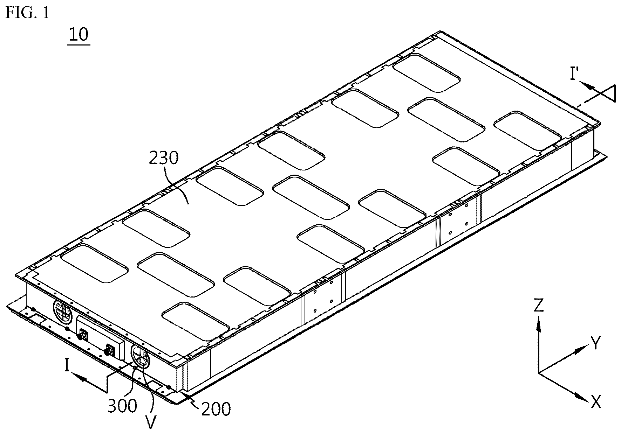

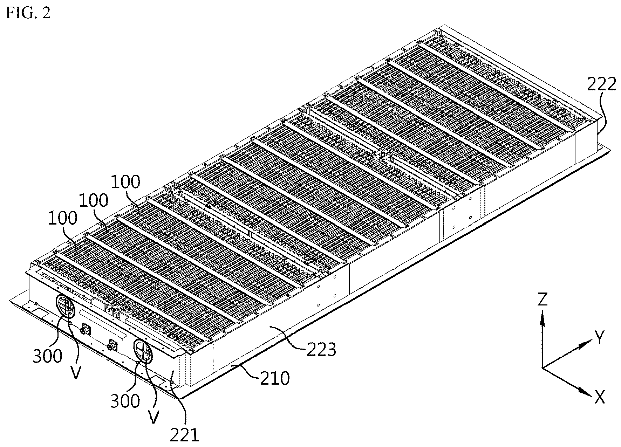

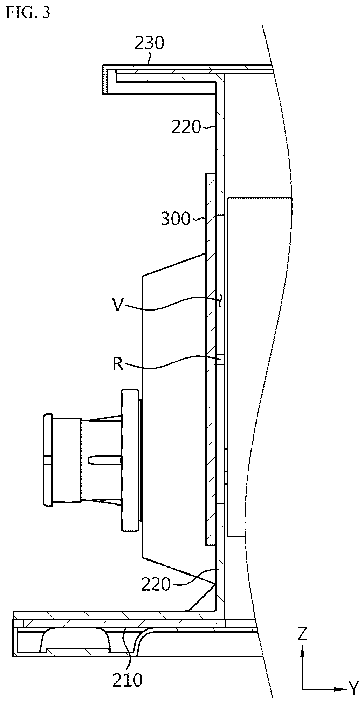

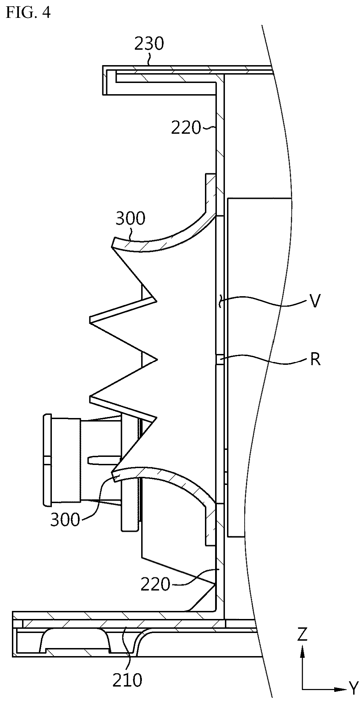

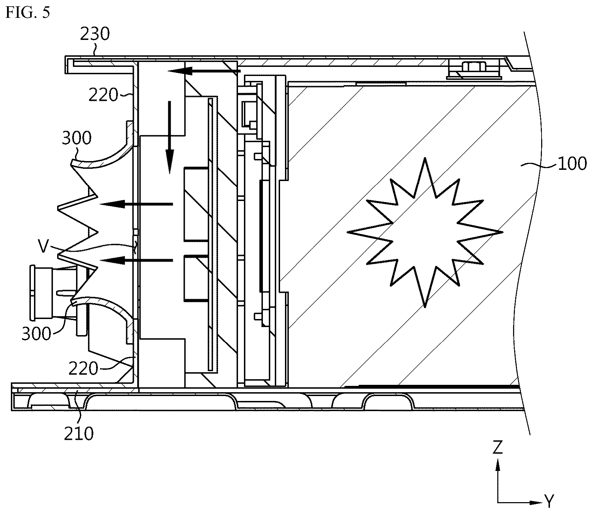

FIG. 1 is a full perspective view of a battery pack according to an embodiment of the present disclosure, FIG. 2 is a perspective view showing the inside of the battery pack according to an embodiment of the present disclosure, and FIG. 3 is an enlarged cross-sectional view showing a cover member in the battery pack according to an embodiment of the present disclosure. Additionally, FIG. 4 is a cross-sectional view showing an embodiment of the cover member in open state in the battery pack according to an embodiment of the present disclosure. Additionally, FIG. 5 is a diagram showing a gas venting direction in the battery pack according to an embodiment of the present disclosure. For example, FIG. 5 may be a cross-sectional view of FIG. 1, taken along the line I-I', showing some components at the front side.

Referring to FIGs. 1 to 5, the battery pack 10 according to an embodiment of the present disclosure includes a battery cell 100, a pack case 200 and a cover member 300.

First, referring primarily to FIG. 2, the battery cell 100 may include a plurality of battery cells. Although not shown in the drawings, the plurality of battery cells 100 may include an electrode assembly, a cell case accommodating the electrode assembly and an electrode lead connected to the electrode assembly and extended outward from the cell case to act as an electrode terminal. In this instance, the plurality of battery cells 100 may be electrically connected to each other.

The battery cell 100 may be a pouch-type secondary battery. The cell case of the pouch-type secondary battery may be formed in the shape of a pouch including a metal layer of aluminum interposed between polymer layers.

As shown in FIG. 2, the plurality of battery cells 100 may be arranged side by side in the left-right direction (X axis direction) in a standing position in the vertical direction (Z axis direction). In this instance, each battery cell 100 may have a sealing portion facing the front-rear direction (Y axis direction) and the upward direction (+Z axis direction) and an accommodation portion facing the left-right direction (X axis direction).

The plurality of battery cells 100 may be stacked side by side in the left-right direction (X axis direction) to form a cell array. As shown in FIG. 2, the cell array may include a plurality of cell arrays arranged side by side in the front-rear direction (Y axis direction).

Meanwhile, the present disclosure is not limited to a particular type or shape of the battery cell 100, and various types of battery cells 100 known at the time the application was filed may be used to form the battery pack 10 of the present disclosure.

Additionally, the battery pack 10 according to an embodiment of the present disclosure may include a busbar assembly and/or a terminal electrically connected to the plurality of battery cells 100 accommodated inside.

The pack case 200 may be configured to accommodate the plurality of battery cells 100. That is, the pack case 200 may provide an accommodation space for accommodating the plurality of battery cells 100. The pack case 200 may be made of or include a material having mechanical rigidity such as metal such as steel or SUS or plastics to safely protect the battery cells 100 accommodated inside.

Additionally, the pack case 200 may include a venting portion V. The venting portion V may be configured to vent gas produced from the battery cells 100 received in the pack case 200 to the outside of the pack case 200. The venting portion V may bring the inside of the pack case 200 into communication with the outside.

The venting portion V may be formed in the shape of a hole. That is, the venting portion V may be formed in the shape of the hole in the pack case 200 and configured to bring the inside of the pack case 200 into communication with the outside. For example, the venting portion V may be circular in shape. In this instance, the location, shape or structure of the venting portion V in the pack case 200 may be differently designed depending on the internal structure of the pack case 200.

Meanwhile, the battery pack 10 according to an embodiment of the present disclosure includes the cover member 300. The cover member 300 may be configured to open and close the venting portion V. Specifically, referring to FIGs. 4 and 5, the cover member 300 may be kept attached to the pack case 200 to cover the venting portion V in normal situation and may be opened in a specific situation.

By the above-described exemplary configuration of the present disclosure, as the cover member 300 is configured to cover the venting portion V, it may be possible to prevent infiltration of impurities such as dust into the pack case 200 through the venting portion V. Accordingly, it may be possible to ensure dust resistant functioning of the battery pack 10, thereby ensuring safety and reliability of the battery pack 10.

Specifically, the cover member 300 may be configured to be opened when temperature and/or pressure in the pack case 200 reaches at least one of specific temperature or specific pressure. For example, the cover member 300 may be opened when it is detached or separated from the pack case 200, or a part of the cover member 300 is ruptured by the pressure of gas.

By the above-described exemplary configuration of the present disclosure, when an abnormal situation occurs in the battery pack 10, the cover member 300 may be opened as indicated by the solid arrow shown in FIG. 5 to vent gas produced from the battery cell 100 to the outside of the pack case 200 through the exposed part of the venting portion V quickly. Accordingly, it may be possible to prevent the pressure rise in the pack case 200, and prevent fire spread to the other battery cells 100 when the abnormal situation occurs in the battery cell 100. Accordingly, by the above-described aspect of the present disclosure, it may be possible to ensure safety and reliability of the battery pack 10.

Additionally, the cover member 300 may be attached to the pack case 200. That is, the cover member 300 may be attached to the pack case 200 to completely cover the venting portion V. The cover member 300 may be adhered to the pack case 200. For example, the cover member 300 may have a tape or include an adhesive surface like a tape.

By the above-described exemplary configuration of the present disclosure, in normal situation, the cover member 300 may maintaining the adhesive strength with the pack case 200 to cover the venting portion V. In contrast, when at least one of the specific temperature or the specific pressure is reached, the cover member 300 may easily break to cause the venting portion V to be exposed, so as to vent inside gas to the outside of the pack case 200 quickly.

The cover member 300 may be configured to prevent moisture infiltration. For example, the cover member 300 may include a sealing member to prevent moisture infiltration into the pack case 200. Alternatively, the cover member 300 may have any structure or material for preventing moisture infiltration. For example, the cover member 300 may be made of a waterproofing material like a waterproof tape. By the above-described exemplary configuration of the present disclosure, it may be possible to prevent moisture infiltration into the battery pack 10 through the venting portion V, thereby ensuring waterproofing functioning of the battery pack 10.

Additionally, the cover member 300 may be made of a material having heat resistant performance. The battery pack 10 may generate heat during repeated charging and discharging while in normal operation. Additionally, a device including the battery pack 10, for example, an energy storage system may be placed in a situation in which it is exposed to more heat, especially in high temperature situations like summer.

By the above-described exemplary configuration of the present disclosure, in normal condition of the battery pack 10, the cover member 300 may stably keep covering the venting portion V. Additionally, in case high temperature gas is produced from some battery cells 100 included in the battery pack 10, when the gas is lower than the specific temperature, in particular, when a thermal event does not occur in the battery pack 10 or the battery pack 10 can be normally used, the cover member 300 may not be opened.

Meanwhile, as shown in FIG. 3 and other drawings, the pack case 200 included in the battery pack 10 according to an embodiment of the present disclosure may include a rib R. The rib R may be configured to cover at least part of the venting portion V. The rib R may be configured to support the cover member 300.

By the above-described exemplary configuration of the present disclosure, as the area of contact of the cover member 300 with the pack case 200 is increased, the cover member 300 may be supported or kept adhered to the pack case 200 more firmly in normal condition of the battery pack 10. Accordingly, infiltration of moisture or dust into the pack case 200 may be prevented by the cover member 300 more effectively.

The rib R may be extended across the venting portion V. In particular, the rib R may be extended from one end of the venting portion V to the other end. For example, the rib R may be extended from left to right side of the hole that forms the venting portion V. Additionally, the rib R may be extend from top to bottom of the hole that forms the venting portion V.

A plurality of ribs R may be provided in one venting portion V. In this instance, the plurality of ribs R may be extended in different directions. In particular, one venting portion V may include two ribs R, and the two ribs R may be extended in the horizontal direction and the vertical direction, respectively. Further, as in the embodiment shown in FIG. 2, the ribs R may be arranged in a crisscross shape. As opposed to the above-described embodiment, the size or area of the rib R may be properly designed according to the composition of gas.

By the above-described exemplary configuration of the present disclosure, the ribs R may support and protect the cover member 300 more stably. Further, in this case, it may be possible to effectively prevent infiltration of large impurities into the pack case 200 through the venting portion V, accompanied by damage to the cover member 300. Accordingly, it may be possible to ensure safety of the battery pack 10 in manufacturing or use.

The cover member 300 may be attached to one surface of the pack case 200. According to an embodiment of the present disclosure, as shown in FIGs. 3 to 5, the cover member 300 may be attached to the outer surface of the pack case 200. By the above-described exemplary configuration of the present disclosure, the cover member 300 may be opened to the outside of the pack case 200 more quickly by the flow of gas to the outside of the pack case 200. Additionally, the battery pack 10 may be only manufactured by assembling the pack case 200 and attaching the cover member 300 to the outer side, thereby improving assembly efficiency.

The edge of the cover member 300 may be attached to the pack case 200 along the circumference of the venting portion V. That is, the edge region of the cover member 300 may be configured to be wholly adhered along the circumference of the venting portion V. In this instance, the cover member 300 may be larger than the cross sectional area of the venting portion V to completely cover the venting portion V.

In this instance, the cover member 300 may be circular in shape. When the venting portion V and the cover member 300 are circular in shape like the above-described exemplary configuration of the present disclosure, the adhesion area may be uniform. In this case, the cover member 300 may not be easily uncovered by gas at other temperature and pressure than the specific temperature and pressure. Additionally, it may be possible to prevent damage to specific parts of the venting portion V or the cover member 300 in normal or abnormal situations.

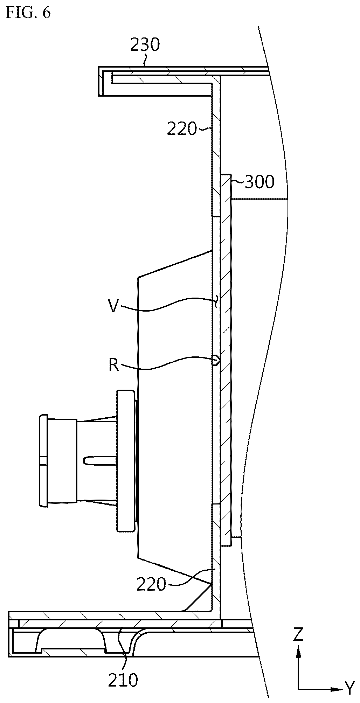

FIG. 6 is an enlarged cross-sectional view showing the cover member in the battery pack according to another embodiment of the present disclosure.

According to another embodiment of the present disclosure, as shown in FIG. 6, the cover member 300 may be attached to the inner surface of the pack case 200 along the circumference of the venting portion V. In this instance, the cover member 300 may be configured to directly face the rib R.

Additionally, the cover member 300 may be configured to contact the rib R. For example, the rib R may be further protruded inwards than the inner surface of the pack case 200. Accordingly, an end portion of the protruded part of the rib R may be configured to contact the cover member 300.

The rib R may include a thickness decreasing part as it goes to the inner surface of the pack case 200. For example, the rib R may include the thickness decreasing part in the left-right direction and/or top-bottom direction as it goes to the inner surface of the pack case 200.

By the above-described exemplary configuration of the present disclosure, it may induce easier rupture of the cover member 300 at the area of contact between the protruded rib R and the cover member 300 when the abnormal situation occurs in the battery pack 10.

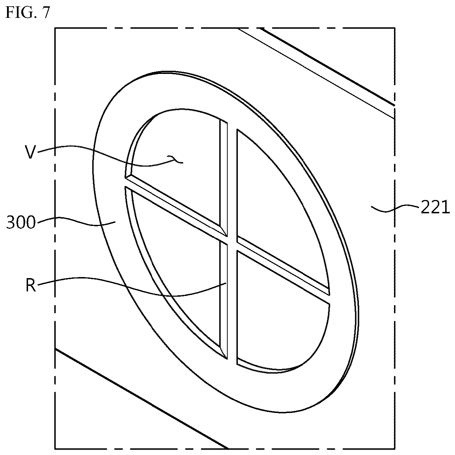

FIG. 7 is an enlarged perspective view showing the main parts of the battery pack according to another embodiment of the present disclosure.

The rib R may be inclined toward the outer side of the pack case 200. Specifically, the rib R extended in the vertical direction may be inclined to vent gas toward two sides of the pack case 200. That is, when viewing the rib R from top, the cross section of the rib R may be inclined toward the outer side of the pack case 200.

By the above-described exemplary configuration of the present disclosure, as the rib R is inclined, when the cover member 300 is opened to vent gas, the gas may be guided toward the outer side of the pack case 200, not the central area of the pack case 200. In this case, it may be possible to prevent gas vented through any venting portion V from entering the pack case 200 again through the adjacent other venting portion V.

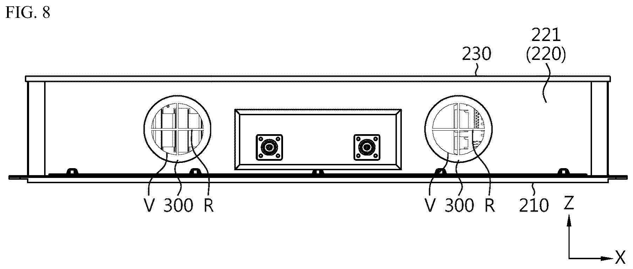

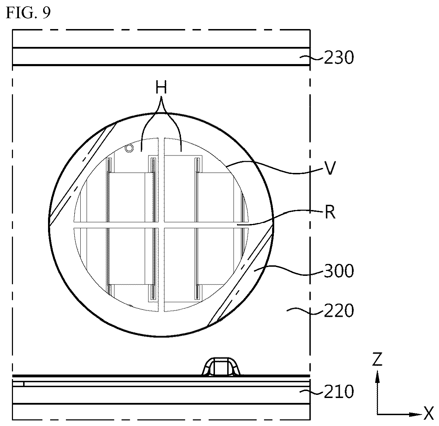

FIG. 8 is a front view of the battery pack according to an embodiment of the present disclosure, and FIG. 9 is an enlarged view showing the main parts of the battery pack according to an embodiment of the present disclosure.

The venting portion V may include a plurality of vent holes H defined by the ribs R. For example, as shown in FIG. 9, the ribs R may be arranged in the crisscross shape to define four vent holes H.

In this instance, the pressure or temperature at which the cover member 300 is opened in at least two of the plurality of vent holes H may be different. By the above-described exemplary configuration of the present disclosure, the pressure or temperature at which the cover member 300 is opened may be different in some of the plurality of vent holes H, to allow a user to design the venting direction as desired. Accordingly, even in the same battery pack 10, the gas venting direction may be differently designed depending on usage environment or location, thereby achieving cost savings and productivity improvement.

For example, the cover member 300 may differ in thickness every at least two of the plurality of vent holes H. That is, in one cover member 300, thickness may be different depending on the location of the vent hole H. The thickness of the cover member 300 may be adjusted in such a way that a part of the cover member 300 may be multilayer, and a part of the cover member 300 may be thicker.

Accordingly, the thicker part of the cover member 300 may not be opened at the specific pressure or temperature. For example, the cover member 300 covering the upper vent hole H among the plurality of vent holes H may have a larger thickness and may not be opened at the specific pressure or temperature, keeping closing the vent hole H. Accordingly, only the cover member 300 covering the lower vent hole H may break open to vent gas downwards.

Alternatively, as opposed to the above-described embodiment, the cover member 300 may have different adhesion strength with the pack case 200. That is, the cover member 300 may have different adhesive strength depending on the location of the vent hole H in the same cover member 300. Accordingly, a part of the cover member 300 having weaker adhesion strength may be opened at the specific pressure or temperature, and a part of the cover member 300 having stronger adhesion strength may not be opened at the specific pressure or temperature. Accordingly, the user may set the venting direction as desired by adjusting the adhesive strength of the cover member 300.

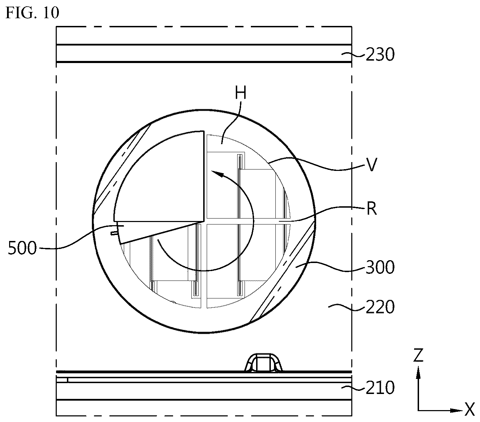

FIG. 10 is an enlarged view showing the main parts of the battery pack according to another embodiment of the present disclosure.

Referring to FIG. 10, the battery pack 10 according to another embodiment of the present disclosure may further include an opening/closing member 500. The opening/closing member 500 may be configured to open and close at least one of the plurality of vent holes H. In other words, the opening/closing member 500 may be configured to selectively open or close at least some of the plurality of vent holes H.

The opening/closing member 500 may be disposed in the pack case 200. Specifically, as shown in FIG. 10, the opening/closing member 500 may be disposed in the outer surface of the pack case 200 and located at the outer position than the rib R and the cover member 300.

By the above-described exemplary configuration of the present disclosure, the user may vent gas in the desired direction by adjusting the number or location of vent holes H through which gas is vented through the opening/closing member 500.

The opening/closing member 500 may have any structure for selectively opening or closing the plurality of vent holes H. According to an embodiment, the opening/closing member 500 may include a case coupled to the pack case 200 and configured to cover one vent hole H and a cover disposed in the case and configured to be extended outward from the case. The cover may be selectively configured to be disposed in the case to cover only one vent hole H, or be extended outward from the case to cover at least one of the remaining vent holes H. To extend the cover outward from the case, the cover may have a protruding portion.

For example, in an embodiment of the present disclosure, the venting portion V may include a plurality of venting portions. Any of the venting portions V may completely open the opening/closing member 500 to vent a large amount of gas, and any other venting portion V may extend the cover of the opening/closing member 500 to close all the vent holes H so as not to vent gas into the atmosphere. Accordingly, gas may be only vented through the venting portion V at the open part of the opening/closing member 500, and thus it may be possible to freely adjust the venting direction.

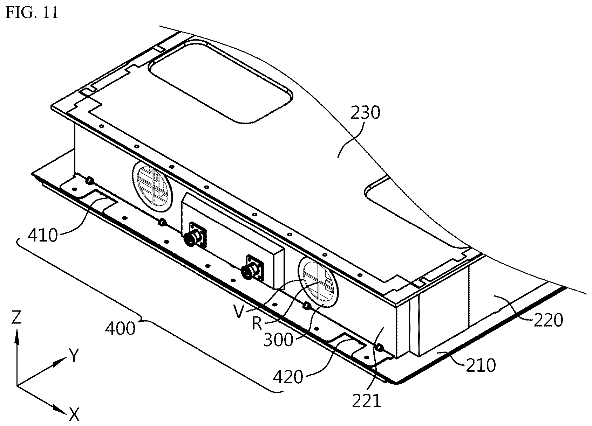

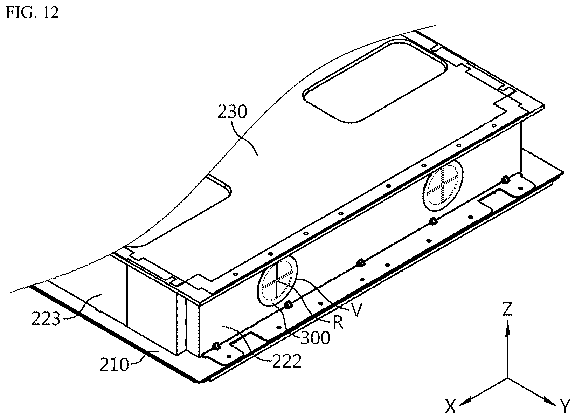

FIG. 11 is a front perspective view of the battery pack according to an embodiment of the present disclosure, and FIG. 12 is a rear perspective view of the battery pack according to an embodiment of the present disclosure.

Referring to FIGs. 2, 11 and 12, the pack case 200 according to an embodiment of the present disclosure may include a base plate 210 and a side plate 220.

The base plate 210 may be configured to be mounted on an upper surface of the plurality of battery cells 100. The base plate 210 may form a lower surface of the pack case 200, and have a rectangular plate shape. Additionally, the base plate 210 may have a flat upper surface to stably mount the plurality of battery cells 100.

The side plate 220 may be extended upward from each side (edge) of the base plate 210. The side plate 220 may include a plurality of unit walls to cover the sides of the plurality of battery cells 100. More specifically, the side plate 220 may include a front plate 221 located at an end portion of the base plate 210 in -Y direction and configured to cover the front side of the battery cells 100, a rear plate 222 located at an end portion in +Y direction and configured to cover the rear side of the battery cells 100 and an end plate 223 located at an end portion in +X direction and -X direction and configured to cover two sides of the battery cells 100.

The venting portion V may be disposed in the side of the pack case 200, i.e., the side plate 220. In this instance, the cover member 300 may be attached to the side plate 220 to cover the venting portion V.

The venting portion V and the cover member 300 may include a plurality of venting portions and a plurality of cover members, respectively. In particular, the venting portion V may be located in at least some of the plurality of unit walls of the side plate 220. The venting portion V may be disposed in two sides of the side plate 220. For example, referring to the illustration of FIGs. 11 and 12, the venting portion V may be disposed in each of the front plate 221 and the rear plate 222.

Additionally, the venting portion V may be separately formed in each of two or more unit walls, and two or more venting portions V may be formed in one unit wall. The plurality of venting portions V may be present in each of two sides of the side plate 220. For example, referring to the illustration of FIGs. 11 and 12, two venting portions V may be present in each of the front plate 221 and the rear plate 222.

In this instance, for each venting portion V, its corresponding cover member 300 may be installed. For example, as shown in the exemplary configuration of FIGs. 11 and 12, each of the front plate 221 and the rear plate 222 may have two venting portions V, and the cover member 300 may be separately disposed for each venting portion V, so the total of four cover members 300 may be included in the battery pack 10.

The plurality of venting portions V and the plurality of cover members 300 may be, in one unit wall, spaced apart from each other in the horizontal direction (for example, left-right direction). Additionally, each of the plurality of venting portions V and the plurality of cover members 300 may be symmetrical with respect to the front plate 221 and the rear plate 222.

By the above-described exemplary configuration of the present disclosure, in the abnormal situation of the battery cell 100, high temperature gas may be vented in two directions of the pack case 200 through the venting portions V in symmetry at two sides of the pack case 200. In particular, in the end portion at which the two venting portions V are located in one unit wall, an electrode lead or an empty space of the plurality of battery cells 100 may be located. Accordingly, it is easy to vent gas produced from the battery cell from the inside of the pack case 200 to the outside of the pack case 200 more quickly.

Meanwhile, the number or location of venting portions V and cover members 300 installed, as described based on the embodiment of FIGs. 2, 11 and 12 is provided as an example, and may be changed to any other number or location.

Additionally, at least some of the plurality of venting portions V may have different sizes. For example, the venting portion V of the front plate 221 and the venting portion V of the rear plate 222 may have different sizes. Alternatively, the venting portions V in the same front plate 221 or rear plate 222 may have different sizes.

The smaller venting portion V has a smaller gas venting area, which increases the gas venting speed. Accordingly, when the specific pressure or the specific temperature is reached, there is a higher probability that the cover member 300 covering the smaller venting portion V will be opened, so gas may be vented toward the smaller venting portion V.

By the above-described exemplary configuration of the present disclosure, the user may set the gas venting direction according to the direction or location of the battery pack 10. Accordingly, even in the same battery pack 10, the gas venting direction may be differently designed depending on usage environment or location, thereby achieving cost savings and productivity improvement.

For example, when the front side of the battery pack 10 faces forwards, the area of the venting portion V disposed in the rear plate 222 may be larger than the area of the venting portion V disposed in the front plate 221. Accordingly, gas may be vented through the venting portion V disposed in the rear plate 222 more quickly, and thus it may be possible to protect the user in front of the battery pack 10.

Meanwhile, referring primarily to FIGs. 1, 11 and 12, the pack case 200 may further include a top plate 230.

The top plate 230 may be configured to cover the top of the plurality of battery cells 100. To this end, the top plate 230 may be coupled to the top of the side plate 220 to form the upper surface of the pack case 200. The top plate 230 may protect the internal components such as the battery cell 100, and prevent venting gas from the battery cell 100 from being released to the outside of the pack case 200, in particular, upwards.

In particular, the top plate 230 may guide venting gas and sparks toward the venting portion V in the internal space of the pack case 200. Specifically, as indicated by the solid arrow in FIG. 5, venting gas may move to the venting portion V along the upper inner surface of the pack case 200. The gas moving upwards may be guided to the front plate 221 and the rear plate 222 having the venting portion V and vented to the outside of the pack case 200 through the venting portion V. Accordingly, by the above-described exemplary configuration of the present disclosure, when the abnormal situation occurs in the battery pack 10, gas produced from the battery cell 100 does not spread in all directions, and may be vented into the atmosphere through the venting portion V quickly, thereby preventing thermal propagation between the battery cells 100.

Meanwhile, the top plate 230 and the base plate 210 may be further protruded outward than the side plate 220. For example, as shown in FIGs. 5, 11 and 12, the top plate 230 and the base plate 210 may be further protruded outward than the front plate 221 and the rear plate 222.

By the above-described exemplary configuration of the present disclosure, it may be possible to prevent gas vented through the venting portion V upon opening of the cover member 300 from moving up or down to the battery pack 10 when the abnormal situation occurs in the battery pack 10. Accordingly, it may be possible to prevent thermal propagation to the adjacent battery packs 10 when the plurality of battery packs 10 of the present disclosure is included in another device.

Meanwhile, the battery pack 10 according to an embodiment of the present disclosure may further include a cooling unit 400. The cooling unit 400 may be configured to allow the cooling medium to flow. Specifically, the cooling unit 400 may include an inlet port 410 and an outlet port 420. The inlet port 410 may be configured to allow the cooling medium to enter the pack case 200, and the outlet port 420 may be configured to allow the cooling medium to exit the pack case 200.

The inlet port 410 and the outlet port 420 may be disposed on one side of the pack case 200. For example, as shown in FIG. 11, the inlet port 410 and the outlet port 420 may be disposed on the side at which the front plate 221 is located. In this instance, the cover member 300 may be disposed on the side of the pack case 200 at which the cooling unit 400 is located.

The inlet port 410 and the outlet port 420 may be connected to a hose in which the cooling medium flows. By the above-described exemplary configuration of the present disclosure, the cover member 300 may be disposed at an area that is prone to condensation by the cooling medium, to prevent infiltration of moisture produced by the condensation into the pack case 200.

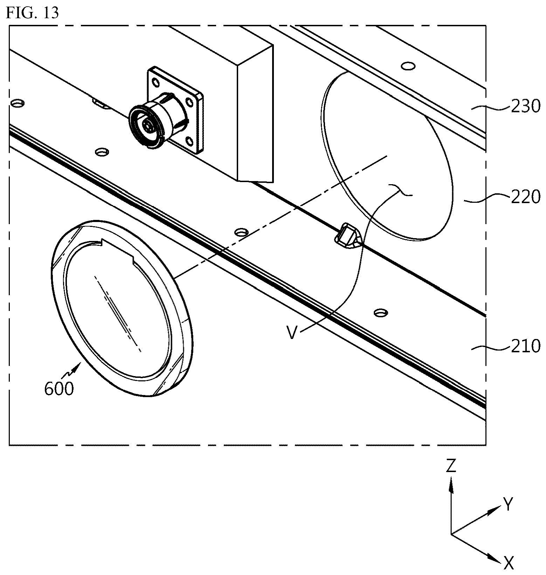

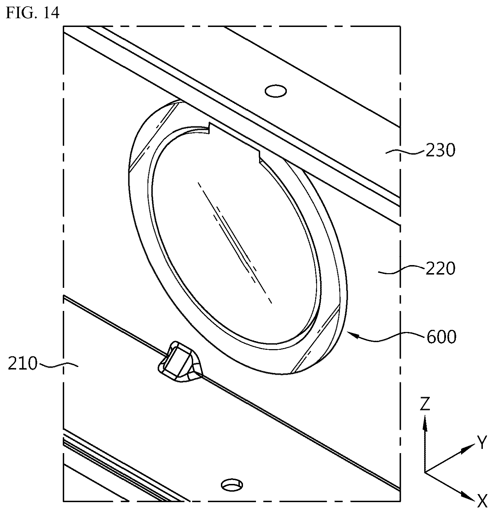

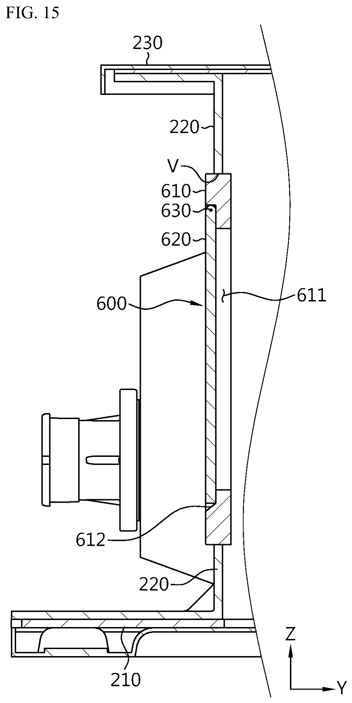

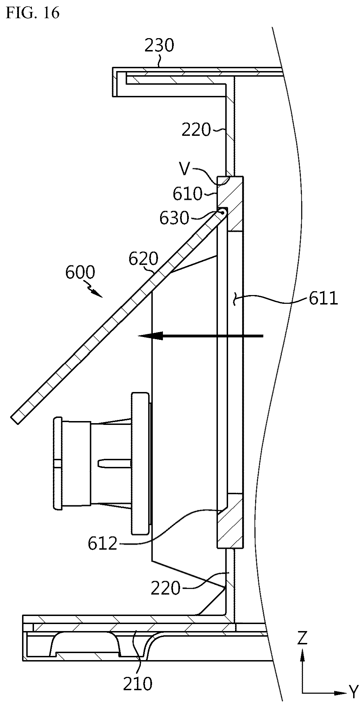

FIG. 13 is a diagram showing a venting device separated from the pack case in the battery pack according to another embodiment of the present disclosure, and FIG. 14 is an enlarged perspective view showing the venting device in the battery pack according to another embodiment of the present disclosure. Additionally, FIG. 15 is a cross-sectional view showing the venting device in closed state in the battery pack according to another embodiment of the present disclosure. Additionally, FIG. 16 is a cross-sectional view showing an embodiment of the venting device in open state in the battery pack according to another embodiment of the present disclosure. For example, FIGs. 15 and 16 are cross-sectional views of FIG. 1, taken along the line I-I', showing some components at the front side.

The battery pack 10 according to an embodiment of the present disclosure may include the venting device 600. The venting device 600 may be mounted in the pack case 200. The venting device 600 may be configured to be mounted in the venting portion V.

The venting device 600 may be coupled to one surface of the side plate 220. For example, the venting device 600 may be coupled to the outer surface of the side plate 220. In this case, the venting device 600 may be coupled to the outer surface of the side plate 220 by bolting. In the above-described embodiment, the venting device 600 may have a smaller size than the venting portion V to completely cover the venting portion V. By the above-described exemplary configuration of the present disclosure, it may be possible to increase productivity by assembling the venting device 600 outside of the pack case 200 after completing the pack case 200, instead of assembling the venting device 600 in the intricate pack case 200.

Additionally, the venting device 600 may be configured to be open and closed. Specifically, as shown in FIG. 15, the venting device 600 is not opened and may be kept closed below the specific pressure, and as shown in FIG. 16, the venting device 600 may be configured to be opened only when the pressure of gas is equal to or higher than the specific pressure due to the thermal event in the battery pack 10.

The venting device 600 may be configured to be opened by the pressure of gas, to vent gas produced from the battery cell 100 received inside to the outside of the pack case 200. By the above-described exemplary configuration of the present disclosure, when the abnormal situation occurs in the battery pack 10, as indicated by the solid arrow shown in FIG. 16, the venting device 600 may be opened to vent gas produced from the battery cell 100 to the outside of the pack case 200 through the opened part of the venting device 600 quickly. Accordingly, it may be possible to prevent the pressure rise in the pack case 200 and fire spread to the other battery cells 100 when the abnormal situation occurs in the battery cell 100. Accordingly, by the above-described aspect of the present disclosure, it may be possible to ensure safety and reliability of the battery pack.

Additionally, by the above-described exemplary configuration of the present disclosure, it may be possible to prevent oxygen from entering the pack case 200 by the closed venting device 600 when venting gas is completely released to the outside of the pack case 200. Accordingly, it may be possible to prevent or suppress flames in the battery pack 10.

Additionally, by the above-described exemplary configuration of the present disclosure, it may be possible to prevent venting gas released into the atmosphere from entering the pack case 200 again.

Specifically, referring to FIG. 16, the venting device 600 may be configured to be opened in a direction by the pressure of gas produced from the battery cell 100 when the pressure of gas inside the battery pack 10 is equal to or higher than the specific pressure due to the thermal event in the battery pack 10. Specifically, the venting device 600 may be configured to be opened in only one direction, and the said direction may be defined as a direction (an outward direction of the pack case 200) from the inside of the pack case 200 toward the outside.

By the above-described exemplary configuration of the present disclosure, gas inside the pack case 200 may be guided to be vented in the specific direction, i.e., to the outside of the pack case 200 by the venting device 600 that is open in only one direction. Additionally, by the above-described exemplary configuration of the present disclosure, it may be possible to prevent gas vented to the outside of the pack case 200 from entering the pack case 200 again.

Meanwhile, the present disclosure is not limited to a particular type or shape of the venting device 600 so long as the venting device 600 has directionality, and various types of venting devices 600 known at the time the application was filed may be used to form the battery pack 10 of the present disclosure.

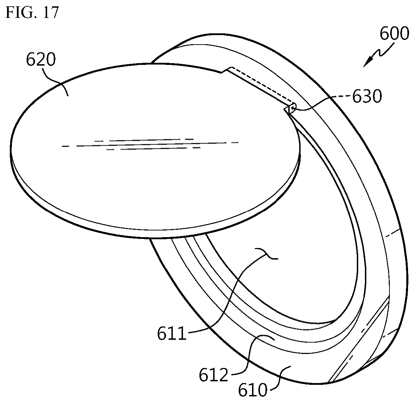

FIG. 17 is a diagram showing the venting device of the battery pack according to another embodiment of the present disclosure.

The structure of the venting device 600 will be described in detail with reference to FIG. 17 together with FIGs. 15 and 16. The venting device 600 may include a mount portion 610, a cover portion 620 and a hinge portion 630.

The mount portion 610 may be coupled to the pack case 200. As described above, when the mount portion 610 is inserted into the venting portion V of the pack case 200 or coupled to one surface of the pack case 200, the venting device 600 may be mounted in the pack case 200. The mount portion 610 may have a discharge hole 611 through which venting gas is released. That is, the mount portion 610 may have a ring shape.

The cover portion 620 may be configured to cover the discharge hole 611. The cover portion 620 may have a plate shape. The cover portion 620 may be coupled to the mount portion 610. The cover portion 620 may be disposed at the inner position than the mount portion 610 and mounted in the mount portion 610.

The venting device 600 may include the hinge portion 630, and the cover portion 620 may be coupled to the mount portion 610 by the hinge portion 630. The hinge portion 630 may be rotatably configured in one side of the cover portion 620. Thereby, the cover portion 620 may be rotatably configured. Additionally, the hinge portion 630 may include or be formed of an elastic body having elasticity.

By the above-described exemplary configuration of the present disclosure, in normal condition of the battery pack 10 in which the thermal event did not occur, the cover portion 620 may keep covering the discharge hole 611 by the elastic force of the hinge portion 630. Additionally, the venting device 600 may not be opened by external forces or vibration acting on the battery pack 10.

Meanwhile, when the thermal event occurs in the battery pack 10, the cover portion 620 may be configured to be opened in a direction by the pressure of gas. That is, when the internal pressure is equal to or higher than the specific pressure by the gas inside the pack case 200, the internal pressure may be greater than the elastic force that keeps the hinge portion 630 closed, and the hinge portion 630 may rotate to open the cover portion 620. To this end, the elastic modulus or material of the hinge portion 630 may be designed to be rotated at or above the specific pressure.

By the above-described exemplary configuration of the present disclosure, in normal situation, the cover portion 620 may be kept closed to maintain the impurity infiltration prevention performance of the battery pack 10 including waterproofing or dust resistance, and when the thermal event occurs, the cover portion 620 may be opened to prevent heat accumulation in the battery pack 10.

Referring to FIGs. 15 and 17, the mount portion 610 may include an inclined portion 612. The inclined portion 612 may be inclined downward from the edge of the discharge hole 611. By the above-described exemplary configuration of the present disclosure, when the cover portion 620 is opened at or above the specific pressure, the opening operation of the cover portion 620 may not be obstructed by the mount portion 610, or the inclined portion 612 may guide the opening direction of the cover portion 620.

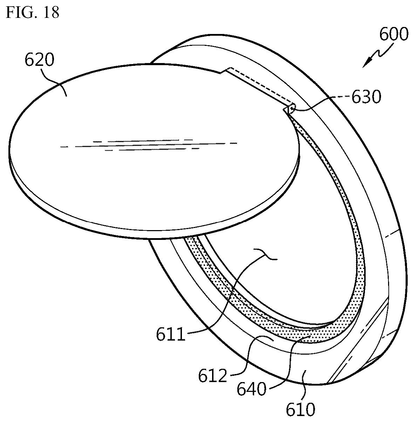

FIG. 18 is a diagram showing the venting device of the battery pack according to another embodiment of the present disclosure.

Referring to FIG. 18, the venting device 600 may further include an inner sealing member 640. The inner sealing member 640 may be disposed along the circumference of the discharge hole 611. The inner sealing member 640 may be disposed between the cover portion 620 and the mount portion 610. The inner sealing member 640 may be made of an elastic material, for example, silicone.

By the above-described exemplary configuration of the present disclosure, with the inner sealing member 640, it may be possible to prevent gas leakage through the space between the cover portion 620 and the mount portion 610 when the cover portion 620 is not open in the mount portion 610.

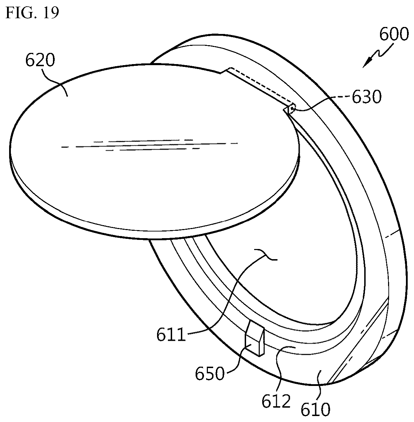

FIG. 19 is a diagram showing the venting device of the battery pack according to another embodiment of the present disclosure.

Referring to FIG. 19, the venting device 600 may further include a stopper protrusion 650. The stopper protrusion 650 may be protruded upward from the mount portion 610. In this instance, the cover portion 620 may be disposed at the inner position than the stopper protrusion 650. Accordingly, by the above-described exemplary configuration of the present disclosure, while in closed state, the cover portion 620 may be fixed by the stopper protrusion 650, so the cover portion 620 may not be easily opened at lower pressure than the specific pressure or in a situation vibration occurs.

The stopper protrusion 650 may be made of an elastic material. By the above-described exemplary configuration of the present disclosure, when the cover portion 620 is to be opened, the cover portion 620 may be bent outwards and unfixed. Alternatively, the cover portion 620 may be unfixed by breakage of the stopper protrusion 650.

Alternatively, as opposed to the above-described embodiment, when the cover portion 620 covers the discharge hole 611, the stopper protrusion 650 may be protruded outward from the mount portion 610 to fix the cover portion 620, and at the specific pressure, the stopper protrusion 650 may move in the inward direction of the mount portion 610 to open the cover portion 620. Accordingly, when the cover portion 620 is to be opened, the cover portion 620 may be unfixed from the stopper protrusion 650.

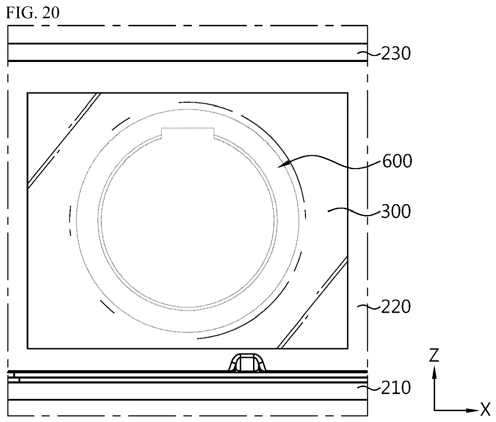

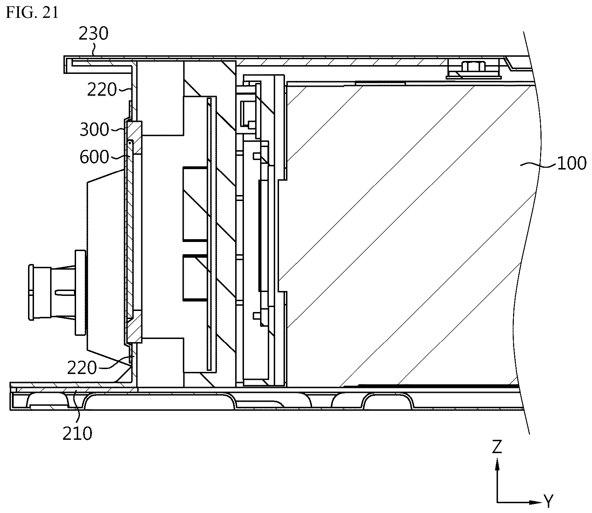

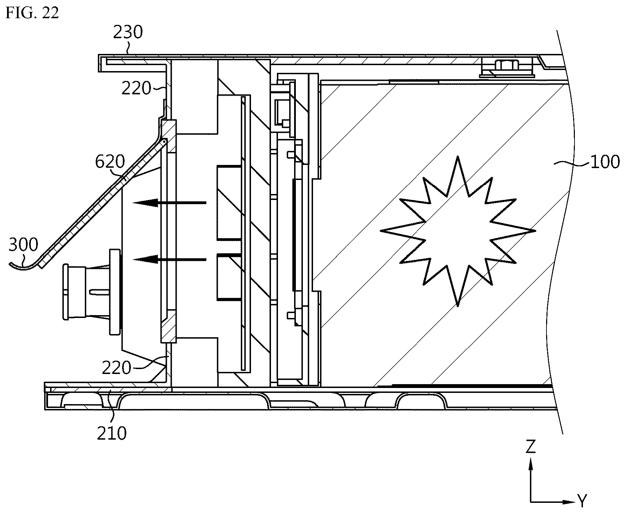

FIG. 20 is a front view showing the main parts of the battery pack including the cover member according to another embodiment of the present disclosure, FIG. 21 is a cross-sectional view of the battery pack including the cover member according to another embodiment of the present disclosure, and FIG. 22 is a cross-sectional view showing an embodiment of the cover member in open state in the battery pack according to another embodiment of the present disclosure.

The cover member 300 may be configured to cover the venting device 600. The cover member 300 may be attached to the pack case 200. The cover member 300 may be attached to the outer side of the venting device 600. That is, the cover member 300 may be attached to the pack case 200 and configured to cover at least part of the venting device 600. In this instance, as shown in FIG. 20, the cover member 300 may have a larger width than the venting device 600 to completely cover the venting device 600 in the horizontal direction. Alternatively, the cover member 300 may be attached to the venting device 600, specifically, the mount portion 610.

By the above-described exemplary configuration of the present disclosure, the cover member 300 may prevent the venting device 600 from being easily opened, so the venting device 600 may not be easily opened by gas at other temperature and pressure than the specific temperature and pressure.

Referring to FIGs. 21 and 22, in normal situation, the cover member 300 may be kept attached to the pack case 200 to cover the venting device 600, and be opened in the specific situation. Specifically, when the pressure in the pack case 200 reaches the specific pressure, then the venting device 600 is opened, the cover member 300 may be opened together. For example, as shown in FIG. 22, the cover member 300 may be opened when detached and separated from the pack case 200.

By the above-described exemplary configuration of the present disclosure, in normal situation, moisture infiltration into the battery pack 10 may be prevented, and when the abnormal situation occurs in the battery pack 10, the venting device 600 and the cover member 300 may be opened as indicated by the solid arrow shown in FIG. 22 to vent gas produced from the battery cell 100 to the outside of the pack case 200 through the opened part of the venting device 600 quickly.

Accordingly, when the abnormal situation occurs in the battery cell 100, it may be possible to prevent the pressure rise in the pack case 200 and fire spread to the other battery cells 100. Accordingly, by the above-described aspect of the present disclosure, it may be possible to ensure safety and reliability of the battery pack 10.

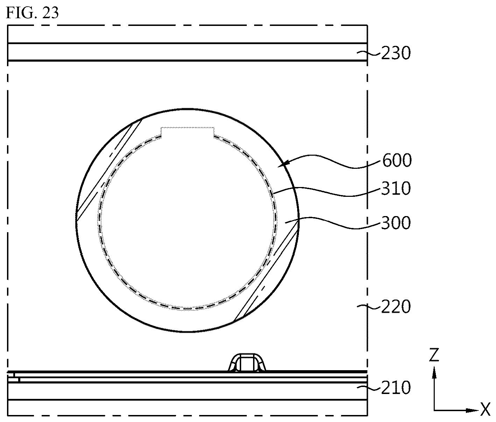

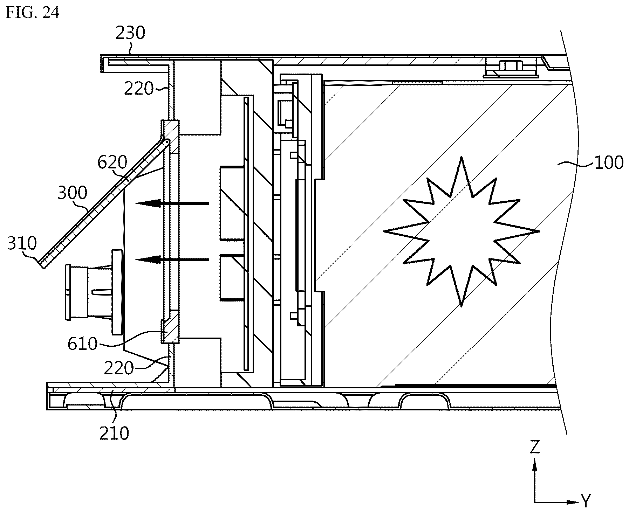

FIG. 23 is a front view showing the main parts of the battery pack including the cover member according to another embodiment of the present disclosure, and FIG. 24 is a cross-sectional view showing an embodiment of the cover member in open state in the battery pack according to another embodiment of the present disclosure.

According to another embodiment of the present disclosure, as in the embodiment shown in FIGs. 23 and 24, the cover member 300 may have a breaking line 310. The breaking line 310 may be formed along the area where the venting device 600 is opened. For example, the breaking line 310 may be formed along the circumference of the cover portion 620 of the venting device 600.

Accordingly, as shown in FIG. 16, when the pressure in the pack case 200 reaches the specific pressure and the venting device 600 is opened, the cover member 300 may break along the breaking line 310, and thereby be opened more easily.

By the above-described exemplary configuration of the present disclosure, even when the cover member 300 is disposed corresponding to the area of the venting device 600 or the adhesive strength of the cover member 300 is strong, the cover member 300 may break easily to vent gas to the atmosphere quickly.

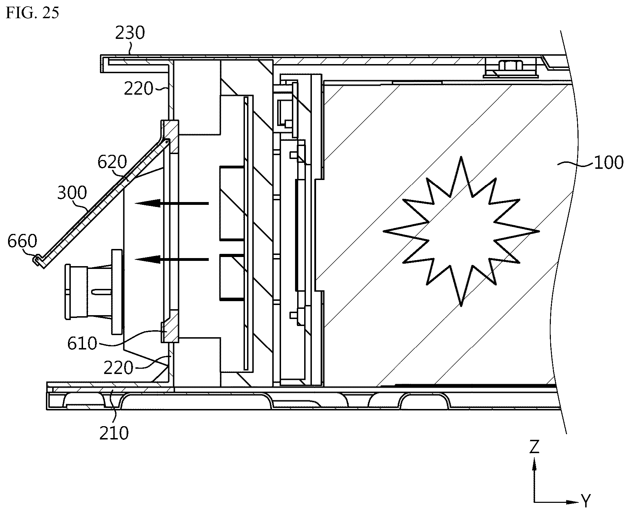

FIG. 25 is a cross-sectional view showing an embodiment of the cover member in open state in the battery pack according to another embodiment of the present disclosure.

Alternatively, as in the embodiment shown in FIG. 25, the venting device 600 may have a protruding portion 660 protruded toward the cover member 300. The protruding portion 660 may be disposed at the lower end of the cover portion 620. The protruding portion 660 may be configured such that at least part of the cover portion 620 is protruded.

By the above-described exemplary configuration of the present disclosure, when the pressure in the pack case 200 reaches the specific pressure and the venting device 600 is opened, the cover member 300 may easily break corresponding to the opened area of the venting device 600 by the action of a push force of the protruding portion 660 on the cover member 300. Accordingly, it may be possible to vent gas to the outside of the pack case 200 more quickly.

An energy storage system (ESS) according to an embodiment of the present disclosure includes the battery pack 10 according to the present disclosure. The ESS may include, for example, a battery container including a plurality of battery packs 10 and a container housing accommodating the plurality of battery packs 10 stacked. The ESS may include one or more battery systems.

Besides, the present disclosure may include various battery systems including the battery pack 10 according to the present disclosure. For example, the battery system according to the present disclosure may include a battery charging system, a battery exchange system, a battery repair system according to the present disclosure.

Additionally, the present disclosure may include a vehicle including the battery pack 10 according to the present disclosure. The vehicle according to the present disclosure may include, for example, an electric vehicle, a hybrid electric vehicle or a plug-in hybrid electric vehicle. The vehicle may include a four-wheeled vehicle and a two-wheeled vehicle. The vehicle may operate using power supplied from the battery pack 10 according to an embodiment of the present disclosure.

Although the exemplary embodiments of the present disclosure have been hereinabove illustrated and described, the present disclosure is not limited to the above-described particular embodiments, and a variety of modifications and variations may be made thereto by those having ordinary skill in the technical field pertaining to the present disclosure without departing from the claimed subject matter of the present disclosure, and such variations should not be separately understood from the technical aspect or prospect of the present disclosure.

10: Battery pack
100: Battery cell
200: Pack case
V: Venting portion
H: Vent hole
R: Rib
210: Base plate
220: Side plate
221: Front plate
222: Rear plate
223: End plate
230: Top plate
300: Cover member
310: Breaking line
400: Cooling unit
410: Inlet port
420: Outlet port
500: Opening/closing member
600 : Venting device
610: Mount portion
611: Discharge hole
612: Inclined portion
620: Cover portion
630: Hinge portion
640: Inner sealing member
650: Stopper protrusion
660: Protruding portion

## Claims

1. A battery pack comprising:
a plurality of battery cells;
a pack case accommodating the plurality of battery cells, and having a venting portion configured to vent gas produced from the battery cell to outside; and
a cover member attached to the pack case and configured to open and close the venting portion.

2. The battery pack according to claim 1,
wherein the cover member is configured to be opened to vent the gas produced from the battery cell to the outside when at least one of a specific temperature or a specific pressure in the pack case is reached.

3. The battery pack according to claim 1,
wherein the pack case includes:
a rib configured to cover at least part of the venting portion.

4. The battery pack according to claim 3,
wherein the cover member is attached to an outer surface of the pack case along a circumference of the venting portion.

5. The battery pack according to claim 3,
wherein the cover member is configured to be attached to an inner surface of the pack case along a circumference of the venting portion, and directly face the rib.

6. The battery pack according to claim 5,
wherein the rib includes a thickness decreasing part toward the inner surface of the pack case.

7. The battery pack according to claim 3,
wherein the rib is inclined in an outward direction of the pack case.

8. The battery pack according to claim 3,
wherein the venting portion includes a plurality of vent holes defined by the rib, and
wherein the cover member is configured to be opened in at least two of the plurality of vent holes at different pressures or temperatures.

9. The battery pack according to claim 3,
wherein the venting portion includes a plurality of vent holes defined by the rib, and
wherein the battery pack further comprises an opening/closing member disposed in the pack case and configured to open and close at least one of the plurality of vent holes.

10. The battery pack according to claim 1,
wherein the venting portion includes a plurality of venting portions, and
wherein at least some of the plurality of venting portions have different sizes.

11. The battery pack according to claim 1, further comprising:
a cooling unit disposed in the pack case and configured to allow a cooling medium to flow, and
wherein the cover member is disposed on a side of the pack case at which the cooling unit is located.

12. The battery pack according to claim 1, further comprising:
a venting device mounted in the venting portion and configured to be opened and closed.

13. The battery pack according to claim 12,
wherein the cover member is attached to an outer side of the venting device, and configured to be opened together when the venting device is opened in order to vent the gas to the outside of the pack case.

14. The battery pack according to claim 12,
wherein the venting device has a protruding portion configured to be protruded toward the cover member.

15. An energy storage system (ESS) including the battery pack according to any one of claims 1 to 14.
